**Europäisches Patentamt**

**European Patent Office**

**Office européen des brevets**

(19)

(11) Veröffentlichungsnummer: **0 256 289**
**B1**

(12) **EUROPÄISCHE PATENTSCHRIFT**

(45) Veröffentlichungstag der Patentschrift:
**03.01.90**

(51) Int. Cl.⁴: **B25B 21/00**

(21) Anmeldenummer: **87109806.7**

(22) Anmeldetag: **07.07.87**

(54) **Vorrichtung zum Setzen von Befestigungselementen oder Stiften.**

(30) Priorität: **22.07.86 DE 3624723**

(43) Veröffentlichungstag der Anmeldung:
**24.02.88 Patentblatt 88/8**

(45) Bekanntmachung des Hinweises auf die Patenterteilung:
**03.01.90 Patentblatt 90/1**

(84) Benannte Vertragsstaaten:
**CH DE FR GB IT LI**

(56) Entgegenhaltungen:
**DD-A- 95 209**
**DE-A- 1 932 411**
**DE-A- 3 419 687**

(73) Patentinhaber: **WEBER Schraubautomaten GmbH & Co. KG, Aurikelstr. 11-15, D-8190 Wolfratshausen(DE)**

(72) Erfinder: **Weber, Karl-Heinz, Aurikeistrasse 11-15, D-8190 Wolfratshausen(DE)**

(74) Vertreter: **Patentanwälte Grünecker, Kinkeldey, Stockmair & Partner, Maximilianstrasse 58, D-8000 München 22(DE)**

## Beschreibung

Die Erfindung betrifft eine Vorrichtung der im Oberbegriff des Patentanspruchs 1 angegebenen Art.

Bei einer aus dem Prospektblatt 1.5.8.1. "Telegramm", 1983 von der Anmelderin herausgegeben, bekannten Vorrichtung dieser Art ist die Abtastvorrichtung in einer im Gehäuse in axialer Richtung verschiebbaren Platte untergebracht, an der eine Schraubspindel angreift, mit der sich die axiale Position der Abtastvorrichtung relativ zur Haltewelle bzw. zur Schalthülse verändern läßt, um den Abschaltpunkt an die jeweilige Einschraubtiefe anzupassen. Da die Haltewelle im Inneren des Gehäuses axial verschieblich untergebracht ist und auch die Schalthülse relativ zur Haltewelle axial beweglich und nur über einen bestimmten Bereich der Ausfahr-Schiebebewegung der Haltewelle mit dieser gemeinsam bewegbar ist, ergeben sich in der Praxis bei der Verstellung des Abschaltpunktes durch Verändern der axialen Position der Abtastvorrichtung Schwierigkeiten, die das Auffinden der axialen Position des neuen Abschaltpunktes erschweren. Die Verstellung des Abschaltpunktes bei der bekannten Vorrichtung ist zeitaufwendig und mühsam. Zudem ist der bauliche Aufwand für die Verstellung der Abtastvorrichtung groß. Dem Bestreben, eine möglichst schlanke und glattflächige Vorrichtung zu schaffen, stehen die außen vorstehenden Teile der Verstellvorrichtung entgegen.

Aus der US-PS 29 89 996 ist eine Schraubvorrichtung einer anderen Art bekannt, bei der zu Zurückziehen des Schraubendrehwerkzeugs im Gehäuse ein mit dem Schraubendrehwerkzeug verfahrbarer Steuerflansch vorgesehen ist, der mit einem außen am Gehäuse schwenkbar gelagerten Winkelhebel bei Erreichen der eingestellten Einschraubtiefe zusammenarbeitet, um ein Ventil für einen Rückzugsantrieb zu betätigen. Die Schraubentiefe wird hierbei jedoch durch eine außerhalb des Gehäuses angeordnete Verstelleinrichtung eingestellt.

Der Erfindung liegt die Aufgabe zugrunde, eine Vorrichtung der eingangs genannten Art zu schaffen, bei der sich der Schaltpunkt präzise, leicht und rasch an die jeweilige Setzbedingung anpassen läßt.

Die gestellte Aufgabe wird erfindungsgemäß mit den im kennzeichnenden Teil des Patentanspruchs 1 angegebenen Merkmalen gelöst.

Bei dieser Ausbildung läßt es die Schalthülse aufgrund ihrer Doppelfunktion zu, die axiale Position der Haltewelle relativ zur Schalthülse so zu verstellen, daß der neue Abschaltpunkt präzise, leicht und rasch erreicht wird. Die Verstellung erfolgt dabei zwischen den an der Bewegung beim Setzen teilnehmenden Komponenten. Die Position der Abtastvorrichtung bleibt dabei unverändert. Da sozusagen die Ist-Lage der Haltewelle relativ zur Abtastkante verändert wird, wirken sich die bisher bei der Einstellung schädlichen axialen Spiele, die während der Einstellung der axialen Position der Abtastvorrichtung das angestrebte Ergebnis verfälschten, nicht mehr aus. Dazu kommen wegen der im Gehäuse untergebrachten Verstellvorrichtung der Vorteil eines kompakten Gehäuses und der Wegfall außen vorstehender Teile der Verstellvorrichtung. Es erfolgt die Verstellung des Abschaltpunktes mit einer Schraubbewegung, was eine sehr leichtgängige und präzise Verstellung gestattet. Die Anschlaghülse ist als zusätzliches Element zwischen die Schalthülse und die Haltewelle eingeordnet und mit ihr nach Art eines verschraubbaren Teleskops vereinigt. Diese Verbindung ist relativ hoch belastbar.

Es ist zwar aus der US-PS 2 446 363 bei einer Schraubvorrichtung einer anderen Art bekannt, eine im Inneren des Gehäuses auf einer Antriebs-Hohlwelle verschraubbare Vorspannmutter einer Rutschkupplung dadurch zu verstellen, daß durch nach außen offene Gehäuseschlitze mit einem Drehwerkzeug an der Vorspannmutter angegriffen wird. Jedoch wird mit dieser Verstellung nur das Grenzmoment der Rutschkupplung verändert, so daß hieraus keine Anregung für eine Verstellung des Abschaltpunktes einer Vorrichtung der eingangs genannten Art ableitbar ist.

Bei der vorteilhaften Ausführungsform dient zur Mitnahme der Schalthülse ein Widerlager an der Anschlaghülse, an dem die Haltewelle beim Ausfahren angreift (Anspruch 3).

Zweckmäßig ist ferner eine Ausführungsform (Anspruch 2), bei der ein Axialdrucklager die Drehbewegung ermöglicht, die zwischen der Haltewelle und der Anschlaghülse auftritt, weil das Axialdrucklager verschleißarm selbst relativ hohe Abfangkräfte aufnimmt. Günstig ist ferner, daß das Verschrauben der Schalthülse aufgrund des geringen Drehwiderstandes des Axialdrucklagers leicht durchführbar ist.

Die Handhabung der Vorrichtung bei der Verstellung des Abschaltpunktes ist bei einer weiteren Ausführungsform (Anspruch 4) vereinfacht, weil mit einem einfachen Drehwerkzeug, z.B. einem Paßstift, die Schalthülse über eine gerade sichtbare Einstecköffnung leicht verdreht werden kann, bis der Abschaltpunkt die gewünschte Position erreicht hat. Das Drehwerkzeug wird nur für diese Einstellung benutzt und ansonsten entfernt. Anstelle eines nur zum Einstellen eingesetzten Drehwekzeuges könnte auch ein Einstellring in das Gehäuse eingegliedert sein, der an der Schalthülse angreift und zur Verstellung mit ihr gekuppelt ist. Dieser Einstellring verbliebe dann ständig am Gehäuse. Zweckmäßigerweise erfolgt die Verstellung in einer vorderen Justierstellung der Vorrichtung, in der zwischen den einzelnen Komponenten keine axialen Spiele vorliegen, die das präzise Einstellen erschweren könnten.

Der bei einer bevorzugten Ausführungsform vorgesehene Anschlag (Anspruch 5) stellt sicher, daß, z. B. in einer Schraubvorrichtung, die Haltewelle bei Ausbleiben einer Schraube unter der unvermeidbaren Nachlaufbewegung an einer vorbestimmten Position abgefangen wird, ehe das Setzwerkzeug die Werkstückoberfläche oder sich an dieser beschädigen kann. Tritt die Nachlaufbewegung auf, so wird die Haltewelle zwar über den Abschaltpunkt hinaus bewegt, dann jedoch abgefangen, ehe die Spitze des Setzwerkzeugs eine Schaden anrichtet. Vorteilhaft ist dabei, daß trotz der Verstellbarkeit des Schaltpunktes der axiale Abstand zwischen dem Abschaltpunkt und dem Anschlag, an dem die Haltewelle beim Nachlaufen abgefangen wird, gleich bleibt, während sich die relativ axiale Position der Haltewelle in Bezug auf den Schaltpunkt und die Abfangposition verstellen läßt.

Der Anschlag beeinträchtigt die beim ordnungsgemäßen Setzvorgang ablaufende Kinematik solange nicht, als nicht das Setzwerkzeug gefährlich nahe an die Werkstückoberfläche gelangt. Wird der Bewegungsantrieb über die Abtastvorrichtung ordnungsgemäß abgeschaltet und bleibt das Setzwerkzeug vor Erreichen der Werkstückoberfläche stehen, kommt der Anschlag gar nicht zur Wirkung.

Zweckmäßig ist als Anschlag ein Kunststoffring (Anspruch 6), der Dämpfung erbringt, die einen harten metallischen Anschlag beim Abfangen der Haltewelle vermeidet. Der Kunststoffring ist ferner zur Geräuschminderung günstig und hat den Vorteil, daß beim Verstellen des Abschaltpunktes in der Justierstellung der Vorrichtung der Drehwiderstand für die dann mit axialem Druck am Kunststoffring anliegende Schalthülse gering bleibt.

Bremselemente zwischen der Schalthülse und der Anschlaghülse (Anspruch 7) sorgen dafür, daß bei den arbeitsbedingten Erschütterungen und Kräften im Inneren der Vorrichtung sichergestellt ist, daß sich die Schalthülse nicht ungewollt und unkontrolliert selbsttätig verschraubt. Die Bremselemente bringen allerdings nur eine so starke Hemmung, daß die Verstellung mit vertretbar geringem Kraftaufwand bewerkstelligbar ist. Zweckmäßigerweise sind dabei (Anspruch 6) die Bremselemente in der Anschlaghülse untergebracht, wo sie ihre Bremswirkung wirkungsvoll erbringen.

Eine einfache Drehsicherung der Anschlaghülse wird mit ihrem sechskantigen Außenumfang sichergestellt (Anspruch 9).

Bei einer weiteren Ausführungsform (Anspruch .10) ergibt sich eine ferdernde Vorspannung der Schalthülse, um diese relativ zur Abtastvorrichtung beim Zurückziehen der Haltewelle vor einem neuen Setzvorgang in eine Ausgangsposition zurückzudrücken, ohne sie über den gesamten Hub der Haltewelle zusammen mit dieser bewegen zu müssen.

Begrenzungselemente einer weiteren Ausführungsform (Anspruch 12) verhindern, daß die Schalthülse bei unsachgemäßer Betätigung der Verstellvorrichtung von der Anschlaghülse getrennt wird, bzw. daß die Schalthülse zu weit gegen den Verschiebeantrieb hin zurückgeschoben wird. Die Ringe mit kreisrundem Querschnitt stellen dabei eine gedämpfte Begrenzung und auch sicher, daß die zusammenarbeitenden Elemente an der jeweiligen Grenze ihres relativen Hubes nicht gegeneinander verklemmt werden.

Bei einer weiteren, wichtigen Ausführungsform (Anspruch 13) ist der Gehäuseabschnitt mit der Haltewelle, der Verstell- und der Anschlagvorrichtung zwischen einem Niederhalter-Gehäuseabschnitt, in dem, z.B. in einer Schraub-Vorrichtung, die zugeführten Schrauben vor dem Setzwerkzeug bereitgehalten werden, und einem hinteren Antriebsgehäuseabschnitt eingesetzt, der den Verschiebe-und Drehantrieb enthält.

Das lösbare Zusammensetzen der Gehäuseabschnitte zu einem Gesamtgehäuse ermöglicht ein Austauschen der Gehäuseabschnitte, z.B. bei Reparatur- oder Umrüstarbeiten, und gestattet es auch, den einen oder anderen Gehäuseabschnitt baukastenartig mit anderen Gehäuseabschnitten für andere Funktionen zu kombinieren, so daß beispielsweise der Gehäuseabschnitt mit der Haltewelle, der Anschlag- und der Verstellvorrichtung mit anderen Gehäuseabschnitten kombiniert werden kann, die sich von den vorerwähnten unterscheiden.

In der Praxis tritt häufig die Forderung auf, in einem Arbeiszug mit der Vorichtung mit wenigstens zwei unterschiedlichen Setztiefen zu arbeiten. Dies wird bei einer weiteren zweckmäßigen Ausführungsform (Anspruch 14) dadurch ermöglicht, daß die Schalthülse eine zweite Abtastkante aufweist, der im Gehäuse eine zweite Abtastvorrichtung zugeordnet ist. Damit die zweite Setztiefe auch relativ zur ersten Setztiefe einstellbar ist, läßt sich die zweite Abtastvorrichtung im Gehäuse axial verstellen.

Diese Forderung wird auf baulich einfache Weise bei einer weiteren zweckmäßigen Ausführungsform (Anspruch 15) erfüllt, wenn sich die zweite Abtastvorrichtung mit dem Halteteil in einer axial verlaufenden Ausnehmung des Gehäuses verschieben und wieder festsetzen läßt.

Für eine exakte Verschiebebewegung der zweiten Abtastvorrichtung ist im Gehäuse eine axiale Führungsbahn (Anspruch 16) vorgesehen.

Zum Festlegen der zweiten Abtastvorrichtung nach der Verstellung des zweiten Abschaltpunktes dient bei einer weiteren Ausführungsform (Anspruch 17) eine Klemmvorrichtung.

Diese Klemmvorrichtung kann bei weiteren Ausführungsvarianten (Anspruch 18 und 19) eine Haltemutter an der Abtastvorrichtung selbst oder eine axiale Gewindespindel aufweisen, die zusätzlich den Vorteil einer präzisen Verstellbewegung für die zweite Abtastvorrichtung erbringt.

Eine Ausführungsform der Erfindung wird nachstehend anhand der Zeichnung erläutert. Es zeigen

Fig. 1 eine schematisch Seitenansicht einer Vorrichtung zum Setzen von Befestigungselementen,
Fig. 2a einen Mittelteil der Vorrichtung von Fig. 1, teilweise in Längsschnitt,
Fig. 2b den an den Mittelabschnitt anschließenden Vorderabschnitt, und
Fig. 3 einen Teillängsschnitt einer weiteren Ausführungsform der Vorrichtung.

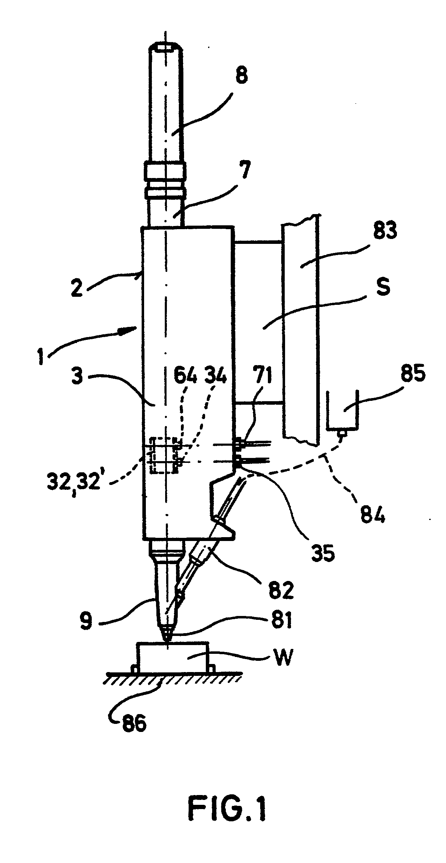

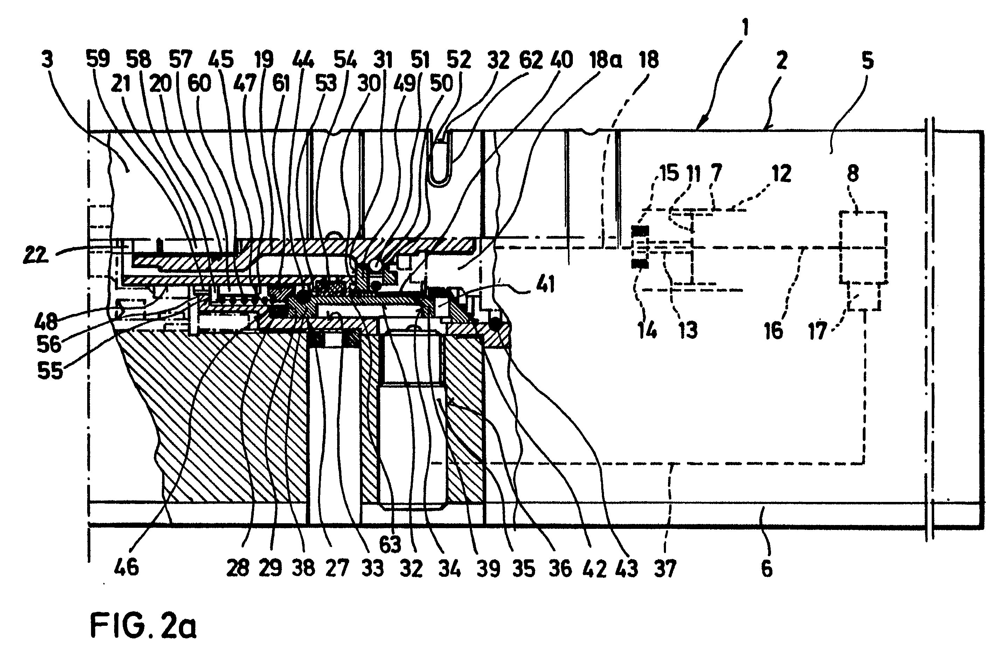

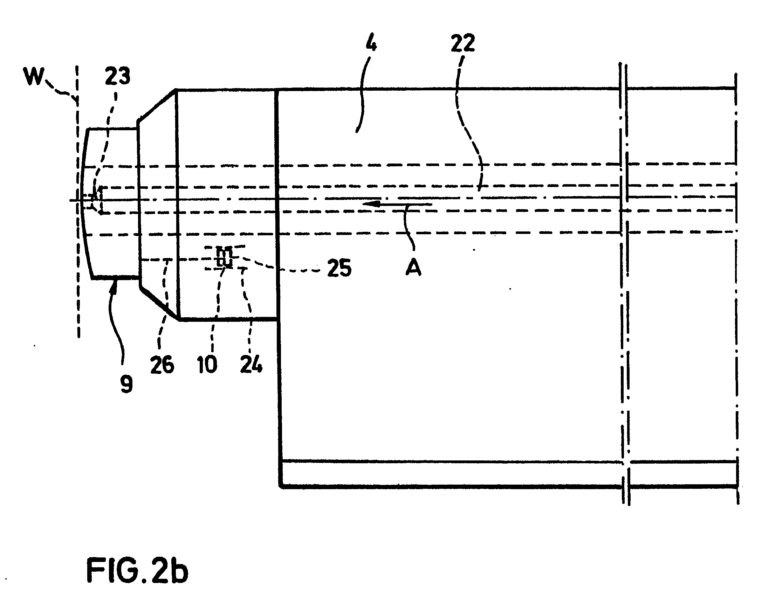

Eine Vorrichtung 1 gemäß Fig. 1, z.B. eine Schraub-Vorrichtung, weist ein allgemein mit 2 bezeichnetes Gehäuse auf, von dem 3 ein Mittelabschnitt des Gehäuses ist. Die Vorrichtung 1 ist an einem stationären Support S einer Tragvorrichtung 83 befestigt und läßt sich daran auf nicht dargestellte Weise in der Höhe verstellen. Beim Arbeiten der Vorrichtung bleibt das Gehäuse 2 stationär. Zur Befestigung der Vorrichtung 1 dient eine in Fig. 2a und 2b erkennbare Nut 6 an der Unterseite des Gehäuses 2. Aus dem Gehäuse 2 ragt oben ein Verschiebeantrieb 7, an den sich ein Drehantrieb 8 herkömmlicher Bauweise anschließt. Unten ragt aus dem Gehäuse ein Niederhalter 9 hervor, an den eine Zuführvorrichtung 82 angeschlossen ist, die über eine Leitung 84 aus einem Reservoir 85 mit den nicht dargestellten Setzelementen oder Befestigungselementen versorgt wird. Am unteren Ende des Niederhalters 9 ist ein Mundstück 81 erkennbar, das der Oberfläche eines Werkstückes W unmittelbar benachbart ist, das auf einer Auflage 86 festgehalten wird, solange die Vorrichtung arbeitet. Im Gehäuse 3 ist eine Schalthülse 32 bzw. 32' angedeutet, die zwei axialbeabstandete Abtastkanten 34 und 64 aufweist, denen Abtastvorrichtungen 35 und 71 im Gehäuse zugeordnet sind. Die Abtastvorrichtungen 35 und 71 sind entweder an eine zentrale Steuervorrichtung oder direkt an die Abschaltvorrichtungen der Antriebe 7 und 8 angeschlossen, um ein Abschaltsignal zu erzeugen, wenn die eine oder die andere Abtastkante 34 bzw. 64 eine bestimmte axiale Position erreicht hat. In der Regel wird mit einer Abtastvorrichtung 35,71 gearbeitet, während die jeweils andere abgeschaltet ist.

Gemäß den Fig. 2a und 2b ist im hinteren (rechten) Gehäuseabschnitt 5 (Fig. 2a) der Verschiebeantrieb 7 und der Drehantrieb 8 untergebracht, wobei der Drehantrieb 8 auch in einem weiteren, angesetzten Gehäuseabschnitt des Gehäuses 2 enthalten sein könnte. Ein vorderer (linker) Gehäuseabschnitt 4 (Fig. 2b) hält den Niederhalter 9, dem die Befestigungselemente nacheinander zugeführt werden, die der Niederhalter 9 vor dem Einschrauben in das Werkstück W für ein Setzwerkzeug 22 (Schraubendrehklinge) bereithält. Im vorderen Gehäuseabschnitt 4 ist ein Niederhalteantrieb 10 untergebracht. Die Antriebe 7, 8 und 10 sind nur schematisch angedeutet. Die Energieversorgung und die Steuerelemente für die Antriebe an den hierfür geeigneten Stellen sind im Gehäuse 2 untergebracht.

Der Bewegungsantrieb 7 enthält einen Kolben 11, der mit einem Kolbenrohr 13 in einem Zylinder 12 in beiden Richtungen druckmittelbeaufschlagt verschiebbar ist, das zum Gehäuseabschnitt 3 weist. Am vorderen Ende des Kolbenrohres 13 sind Klauen 14 angedeutet, die mit Gegenklauen 15 in Eingriff stehen oder in Eingriff bringbar sind, die auf einer Zwischenwelle 18 angebracht sind.

Der Drehantrieb 8 von konventioneller Bauart, z.B. ein Druckluftmotor, ein Hydraulikmotor oder ein Elektromotor mit gegebenenfalls einem Getriebe, greift mit einer Antriebswelle 16 am Kolbenrohr 13 des Verschiebeantriebs 7 an, die auf der Antriebswelle 16 verschiebbar ist. Der Drehantrieb 8 steht ferner mit einer Abschaltvorrichtung 17 in Verbindung. Der Bewegungsantrieb 7 kann gleichzeitig mit dem Drehantrieb 8 abgeschaltet werden. In einer Stift-Setzvorrichtung oder einer Preßvorrichtung wäre ggfs. der Drehantrieb entbehrlich, während er bei einer Niet-Vorrichtung für die Taumelbewegung beim Nietkopf-Formen gebraucht werden kann.

An der Zwischenwelle 18 ist ein Kopfstück 18a angeordnet, das mit einer Haltewelle 19 verschraubt ist, die im Gehäuseabschnitt 3 verdrehbar und längsverschiebbar untergebracht ist. Die Haltewelle 19 besitzt an ihrem vorderen Ende eine Gewindebohrung 20 für ein Einschraubende 21 des Setzwerkzeuges 22, das sich nach vorne bis in den Niederhalter 9 erstreckt und dort einen, z.B., zum jeweils verarbeiteten Schraubentyp passenden Klingenkopf 23 trägt.

Der Niederhalteantrieb 10 enthält einen Kolben 25, der in einem Zylinder 24 in beiden Richtungen druckmittelbeaufschlagt verschiebbar ist und über eine Kolbenstange 26 mit dem Niederhalter 9 in Verbindung steht.

Im Gehäuseabschnitt 3 ist – die Haltewelle umgebend – eine Verstellvorrichtung 27 untergebracht. Ferner sind ein auf einen Gegenanschlag 29 ausgerichteter gehäusefester Anschlag 28 und ein auf eine Anschlagfläche 31 ausgerichtetes Widerlager 30 vorgesehen.

Der Gegenanschlag 29 ist an einem vorderen Endteil 38 der die Haltewelle 19 mit radialem Abstand umgebenden, im Gehäuseabschnitt 3 in einer Stufenbohrung 33 mit der Haltewelle 19 verschiebbaren Schalthülse 32 angebracht, die in dieser Ausführungsform eine Abtastkante 34 für eine Abtastvorrichtung 35 besitzt, die in eine Bohrung 36 des Gehäuseabschnittes 3 eingeschraubt und über eine Schaltverbindung 37 mit der Abschaltvorrichtung 17 zumindest des Drehantriebs 8 in Schaltverbindung ist. Die Abtastvorrichtung 35 kann optischer, induktiver oder mechanischer Art sein. Die Abtastkante 34 definiert einen Abschaltpunkt, bei dem über die Abtastvorrichtung 35, z.B., die Abschaltvorrichtung 17 des Drehantriebs 8 betätigt wird.

Die Abtastkante 34 ist an einem dem Endteil 38 gegenüberliegenden Endteil 39 der Schalthülse 32 nach außen weisend angebracht. Am Innenumfang der Schalthülse 32 ist ein Innengewinde 40, vorzugsweise ein Feingewinde, angeordnet. Im Außenumfang des Endteiles 39 sind im Umfangsrichtung verteilt mehrere radiale Einstecköffnungen 41 eingeformt. Der Enteil 39 läuft außen mit einer schrägen Kante 42 aus, die mit einem Begrenzungselement 43 in Form eines mit kreisrundem Querschnitt, z.B aus Stahl im Gehäuse zusammenwirkt, um die Bewegung der Schalthülse 32 in der Zeichnung nach rechts zu begrenzen. Am Endteil 38 ist innen ein weiteres Begrenzungselement 44 in Form eines solchen O-Ringes angebracht.

Der Anschlag 28 wird von der Stirnfläche eines Kunststoffringes 45 gebildet, der an einer Gehäuseschulter 46 in der Stufenbohrung 33 abgestützt, z.B. angeklebt, ist.

Zwischen der Schalthülse 32 und der Haltewelle 19 ist eine Anschlaghülse 47 angeordnet, die über den größten Teil ihrer Länge einen sechskantigen Außenumfang 48 besitzt. Das Widerlager 30 wird von einer Stirnfläche an einem Endteil 53 der Anschlaghülse 47 gebildet. Die mit dem Widerlager 30 zusammenarbeitende Anschlagfläche 31 wird von einer Stirnfläche eines Vorsprunges 49 gebildet, der ringförmig ausgebildet und mittels eines Axialdrucklagers 50 mit Wälzkörpern 51 auf einem Bund 52 der Haltewelle 19 drehbar gelagert ist.Der Vorsprung 49 ist dafür verantwortlich, daß zumindest über des letzten Teil des Hubes des Bewegungsantriebs 7 in Ausfahr-Schieberichtung A die Anschlaghülse 47 und über diese auch die Schalthülse 32 mit der Haltewelle 19 mitfährt, bis der Anschalg erreicht wird.

Im Endteil 53 der Anschlaghülse 47 sind über den Umfang verteilte Bremselemente 54 vorgesehen, zweckmäßigerweise Kunststoffklötzchen, die auf dem Gewinde 40 der Schalthülse 32 bremsend aufliegen. Die Anschlaghülse 47 ist mit einem im Endteil 53 ausgebildeten Innengewinde 63 auf das Gewinde 40 der Schalthülse aufgeschraubt. Das Begrenzungselement 44 dient zusammen mit dem geringfügig nach innen einspringenden Endteil 39 der Schalthülse 32 zur Begrenzung des Schraubhubes zwischen der Anschlaghülse 47 und der Schalthülse 32.

Vor der Gehäuseschulter 46 liegt eine weitere, nach innen vorspringende Gehäuseschulter 55, die bis zu einem Durchgang 56 mit sechskantigem Querschnitt führt. In den Durchgang 56 ist eine Hülse 57 mit sechskantigem Außenumfang 59 eingeschoben, die sich an einem Bund 58 in Ausfahr-Schieberichtung (Pfeil A) des Setzwerkzeuges 22 abstützt. An der anderen Seite des Bundes 58 liegt ein Ende einer Druckfeder 60 an, die sich mit ihrem anderen Ende an einem Widerlagerring 61 abstützt, der auf den Endteil 38 der Schalthülse 32 innen aufgesteckt ist. Die Druckfeder 60 beaufschlagt die Schalthülse 32 in Richtung auf das Begrenzungselement 43 hin. Im Gehäuseabschnitt 3 ist wenigstens eine in Umfangsrichtung verlaufende Aussparung 62 vorgesehen, die in der dargestellten Anschlag- oder Justierstellung der Schalthülse 32 am Anschlag 28 auf die Einsecköffnungen 41 ausgerichtet ist.

Die Vorrichtung arbeitet wie folgt:

In der dargestellten Lage hat die Vorrichtung 1 einen Arbeitsvorgang gerade abgeschlossen, bei dem im Niederhalter 9 kein Befestigungselement, z. B. keine Schraube, ordnungsgemäß zugeführt worden ist, sondern bei dem das Setzwerkzeug 22, ohne auf eine bereitgestellte Schraube zu treffen, durch den Bewegungsantrieb 7 bis zum Abfangen der Haltewelle 19 in Ausfahr-Schieberichtung A bewegt worden ist, ohne jedoch die Oberfläche des Werkstückes zu berühren. Sobald die Abtastkante 34 die Abtastvorrichtung 39 passierte, wurde zwar der Bewegungsantrieb 7 abgeschaltet. Aufgrund der fehlenden Schraube hat der Nachlauf des Schiebeantriebs 7 die Haltewelle 19 über den Anschaltpunkt hinaus bewegt. Zur Einleitung des nächsten Arbeitsganges wird der Kolben 11 des Verschiebeantriebs 7 in der Zeichnung nach rechts bewegt. Er zieht die Haltewelle 19 zumindest so weit zurück, daß eine neue Schraube zugeführt werden kann. Die Druckfeder 60 drückt auch die Schalthülse 32 und die daran befestigte Anschlaghülse 47 zurück, bis die Schrägfläche 42 an Begrenzungselement 43 abgefangen wird. Gegebenenfalls bewegt sich der Kolben 11 des Bewegungsantriebs 7 weiter bis in seine hintere Ausgangsstellung zurück. Die Klauen 14,15 können ihren Eingriff lösen. Dann soll eine neue Schraube zugeführt werden.

Unter der Annahme, daß erneut keine Schraube ordnungsgemäß den Niederhalter 9 erreicht, wird für den nächsten beabsichtigten Schraubvorgang der Verschiebeantrieb 7 wieder derart betätigt, daß der Kolben 11 nach links verschoben wird, bis die Klauen 14,15 wieder in Eingriff treten. Der Drehantrieb 8 wird in Gang gesetzt, so daß sich die Haltewelle 19 dreht und gleichzeitig ihre Vorschubbewegung in Richtung auf das Werkstück W fortsetzt.

Bei dieser Bewegung der Haltewelle 19 in Ausfahr-Schieberichtung A gelangt zunächst die Anschlagfläche 31 zur Anlage am Widerlager 30, worauf die Anschlaghülse 47 die Schalthülse 32 mitnimmt. Selbst wenn die Abtastkante 34 eine Relativposition im Gehäuse erreicht, bei der die Abtastvorrichtung 35 anspricht und die Antriebe 7,8 abschaltet, wird wiederum durch die unvermeidliche Nachlaufbewegung die Haltewelle 19 weiter in Richtung auf das Werkstück W bewegt. Jedoch kommt, ehe das Kopfstück 23 die Oberfläche des Werkstückes W treffen kann, der Gegenanschlag 29 der Schalthülse 32 zur Anlage am Anschlag 28, wodurch die Bewegung der Haltewelle 19 gestoppt wird. Danach erfolgt ein neuerliches Zurückziehen der einzelnen Teile.

Ist beim nächsten, eingeleiteten Schraubvorgang eine Schraube ordnungsgemäß im Niederhalter 9 bereitgestellt, so wird dank des Gegendrucks am Setzwerkzeug 22 und über die Haltewelle 19 auch am Kolben 11 des Bewegungsantriebs 7 beim Abschalten der Antriebe über die Abtastvorrichtung 35 die Haltewelle 19 schlagartig angehalten. Es wird dabei nicht notwendigerweise der Gegenanschlag 29 am Anschlag 28 angelangt sein, weil der Anschlag 28 nur für das Abfangen der Haltewelle 19 beim Nachlauf infolge des Ausbleibens einer Schraube gebraucht wird.

Denkbar wäre es allerdings auch, den Anschlag 28 zur Begrenzung der maximalen Einschraubtiefe einzusetzen, und davon unabhängig die Abtastvorrichtung 35 zum einschraubdrehmomentabhängigen Anhalten der Antriebe zu benutzen, oder mit der Abtastvorrichtung 35 nur das ordnungsgemäße Anziehen einer Schraube zu überwachen.

Soll für veränderte Einschraubbedingungen oder eine andere Schraubenlänge die Position des Schaltpunktes der Schalthülse 32 verändert werden, so wird die Verstellvorrichtung 27 betätigt. Dazu wird in der dargestellten vorderen Anschlagoder Justierstellung ein Drehwerkzeug (nicht gezeigt) durch die Aussparung 62 in wenigstens eine Einsecköffnung 41 eingeführt und dann die Schalthülse 32 so lange verschraubt, bis über die undrehbar aber verschiebbar im Gehäuse geführte Anschlaghülse 47 die Haltewelle 19 nach rechts oder nach links bewegt worden ist. Dies hat zur Folge, daß sich die Haltewelle 13 relativ zum Abschaltpunkt 34 und gleichzeitig relativ zum Anschlag 28 axial verschiebt. Der axiale Abstand zwischen dem Abschaltpunkt 34 und dem Anschlag 28 bleibt erhalten. Wichtig ist dabei der Kunststoffring 45, den Anschlag 28 bildet, weil er in der Justierstellung, in der ein bestimmter axialer Druck auf allen Komponenten lastet, der Verschraubbewegung wenig Drehwiderstand entgegensetzt.

Der mögliche Hubweg der Schalthülse 32 wird durch den Anschlag 28 einerseits und das Begrenzungselement 43 andererseits begrenzt. Der mögliche Hubweg der Haltewelle 19 wird hingegen durch die Position des Widerlagers 30 einerseits und den nach innen über das Innengewinde 40 einspringenden Endteil 39 der Schalthülse 32 begrenzt, was bedeutet, daß sich die Haltewelle 19 im Gehäuseabschnitt 3 über einen Gesamthub bewegen kann, der sich aus dem möglichen Hub der Schalthülse 32 und dem relativ zur Schalthülse 32 möglich Hub des Axialdruckdrucklagers 50 zusammensetzt.

Zweckmäßigerweise wird der Hub des Setzwerkzeugs 22 in Ausfahr-Schieberichtung A durch die Anschlagvorrichtung unmittelbar und auf die jeweiligen Schraubvoraussetzungen individuell einstellbar begrenzt, ohne daß dabei die konstruktiv gegebene Hubbegrenzung des Kolbens 11 des Bewegungsantriebs 7 wirksam wird, was Beschädigungen des Werkstücks oder des Werkzeugs einerseits und einem hohen Verschleiß der Antriebe andererseits vorbeugt.

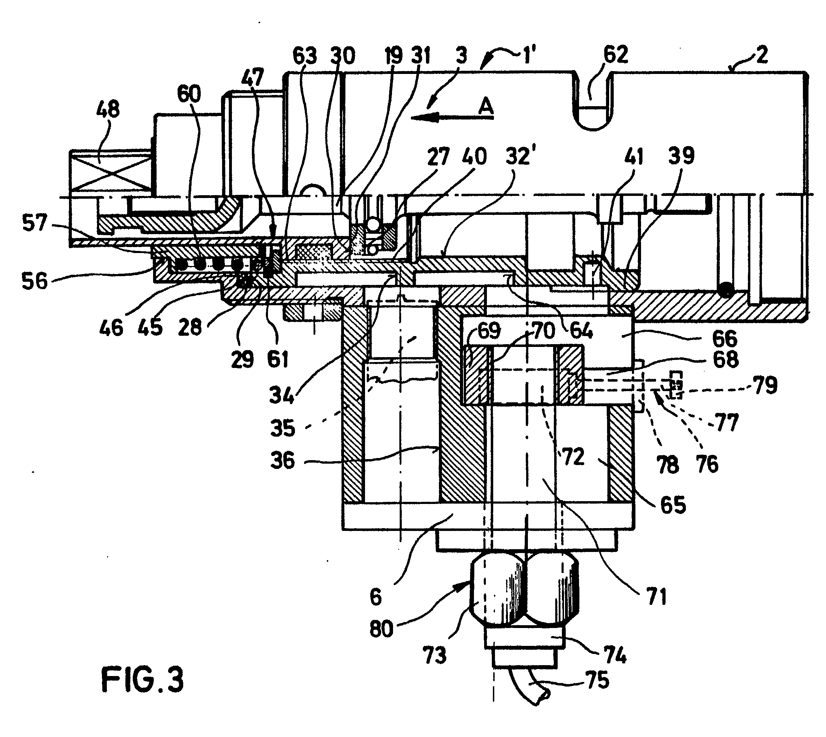

Bei der Vorrichtung 1' von Fig. 3 liegt im wesentlichen der gleiche Aufbau vor wie anhand der Fig. 1 und 2a, 2b beschrieben, so daß hierauf verwiesen wird. Unterschiedlich ist nur, daß an der Schalthülse 32' im axialen Abstand hinter der ersten Abtastkante 34 eine zweite Abtastkante 64 vorgesehen ist, der im Gehäuse 3 eine zweite Abtastvorrichtung 71 zugeordnet ist. Auf diese Weise hat die Vorrichtung 1' zwei Abschaltpunkte, die, z.B., zwei Setztiefen bzw. Einschraubtiefen repräsentieren, mit denen die Vorrichtung arbeiten kann. Die nicht gezeigte, übergeordnete Steuervorrichtung der Vorrichtung 1' kann wahlweise das Signal einer der beiden Abtastvorrichtungen 35 und 71 ignorieren. Eine gemeinsame Verstellung beider Abschaltpunkte erfolgt mittels der Verstellvorrichtung 27, die auch hier zwischen der Schalthülse 32' und der Haltewelle 19 vorgesehen und durch den Schlitz 62 von außen betätigbar ist.

Zusätzlich ist eine Möglichkeit vorgesehen, den zweiten Abschaltpunkt auch relativ zum ersten Abschaltpunkt axial zu verstellen. Zu diesem Zweck ist die zweite Abtastvorrichtung 71 in einer sich axial erstreckenden Ausnehmung 65, die in einen einendig offenen Schlitz 66 übergeführt und von diesem durch Führungsschlitze 68 getrennt ist, mit einem Halteteil 69 verschiebbar. Der Halteteil 69 enthält ein Innengewinde 70, in das die zweite Abtastvorrichtung 71 eingeschraubt ist, so daß ihr Ende auf die zweite Abtastkante 64 ausgerichtet ist. Der Halteteil 69 greift mit seitlichen Vorsprüngen 72 in die Führungsschlitze 68, damit die zweite Abtastvorrichtung 71 bei der Verstellung parallel zur Längsachse der Vorrichtung 1' geführt wird.

Zum Festlegen der zweiten Abtastvorrichtung 71 im Gehäuse 3 dient eine Klemmvorrichtung 80 in Form einer auf die Abtastvorrichtung 71 aufgeschraubten Spannmutter 73, die gegen den Grund der Nut 6 des Gehäuses anpreßbar ist und so den Halteteil 69 in den Schlitzen 68 verklemmt. Aus der Spannmutter 73 ragt das Ende 74 der zweiten Abtastvorrichtung 71 hervor. Darin mündet ein Signalübertragungskabel 75, das zur Steuervorrichtung oder zur Abschaltvorrichtung der Antriebe führt.

Alternativ oder additiv kann auch eine Klemmvorrichtung 76 vorgesehen sein, die aus einer parallel zur Längsachse der Vorrichtung 1' verlaufenden Gewindespindel 77 mit einem Schraubkopf 79 besteht, die in einem Widerlager 78 des Gehäuses 3 verschraubbar ist und im Halteteil 69 angreift. Die Klemmvorrichtung 76, die gegebenenfalls noch eine Kontermutter zum Festlegen der Gewindespindel 77 aufweist, verstellt den Halteteil 69 nach Art einer Mikrometer-Schraube innerhalb des Bereichs, der durch die axiale Länge der Ausnehmung 65 vorgegeben ist.

Die Vorrichtung 1' ist in der sogenannten Justierstellung ihrer Komponenten dargestellt, in der die Haltewelle 19 soweit in Ausfahr-Schieberichtung A gedrückt ist, daß die Anschlagflächen 31 und 30 aneinander liegen und die Schalthülse 32' am Anschlag 28 anliegt, damit die Einstecköffnungen 41 der Schalthülse 32' durch den Schlitz 62 zum Verdrehen der Schalthülse 32' zugänglich sind. Beim Ver drehen der Schalthülse 32' wird die Haltwelle 19 entweder relativ zum Anschlag 28 nach links oder nach rechts verstellt. In dieser Justierstellung sind die Abtastkanten 34 und 64 über die Abschaltpunkte hinaus nach links bewegt worden.

**Patentansprüche**

1. Vorrichtung (1,1') zum Setzen von Befestigungselementen oder Stiften, insbesondere Schraub-Vorrichtung, mit einem Gehäuse (3), in dem eine Haltewelle (19) für ein Setzwerkzeug (22) zumindest verschiebbar angeordnet ist, mit wenigstens einem im Gehäuse untergebrachten Bewegungsantrieb für die Haltewelle (19), der mit der Haltewelle in Verbindung bringbar ist, mit einer gemeinsam mit der Haltewelle in Ausfahr-Schieberichtung verfahrbaren Schalthülse (32, 32'), die wenigstens eine einen innerhalb des Ausfahrhubes der Haltewelle im Gehäuse liegenden Abschaltpunkt definierende Abtastkante (34,64) aufweist, mit einer am Gehäuse angeordneten, mit dem Bewegungsantrieb in Abschaltverbindung stehenden Abtastvorrichtung (35, 71) für die Abtastkante (34, 64), und mit einer mechanischen und von außen zugänglichen Verstellvorrichtung (27) zum Verstellen der axialen Position des Abschaltpunktes relativ zur Haltewelle (19), dadurch gekennzeichnet, daß die Schalthülse (32, 32') auf einer gegen Verdrehen abgestützten, die Haltewelle (19) umgebenden Anschlaghülse (47) mittels ineinandergreifender Gewinde (40, 63) verschraubbar ist, auf die in Ausfahr-Schieberichtung (A) zur Mitnahme der Anschlaghülse (47) und der Schalthülse (32) ein Mitnehmer-Vorsprung (31, 49) der Haltewelle (19) ausgerichtet ist, und daß die Schalthülse (32, 32') einen von außen zugänglichen Stellteil der Verstellvorrichtung (27) bildet.

2. Vorrichtung nach Anspruch 1, dadurch gekennzeichnet, daß der Mitnehmer-Vorsprung (31, 49) ein relativ zur Haltewelle (19) drehbarer aber unverschiebbarer Ringkörper eines auf der Haltewelle (19) angebrachten Axialdrucklagers (50) ist.

3. Vorrichtung nach Anspruch 2, dadurch gekennzeichnet, daß an der Anschlaghülse (47) ein Widerlager (30) angeordnet ist, das entgegen der Ausfahr-Schieberichtung (A) auf den Mitnehmervorsprung (31, 49) der Haltewelle (19) ausgerichtet ist.

4. Vorrichtung nach Anspruch 1, dadurch gekennzeichnet, daß in der Schalthülse (32, 32') außen mehrere über den Umfang verteilte Einstecköffnungen (41) für ein Drehwerkzeug vorgesehen sind, und daß im Gehäuse (3) wenigstens eine in Umfangsrichtung verlaufende und in einer vorgeschobenen Justierstellung der Haltewelle (19) auf die Einstecköffnungen (41) ausgerichtete Aussparung (62) vorgesehen ist.

5. Vorrichtung nach Anspruch 1, dadurch gekennzeichnet, daß im Inneren des Gehäuses (3) ein Anschlag (28) zum Abfangen der Haltewelle (19) in Ausfahr-Schieberichtung (A) vorgesehen ist, und daß die axiale Abfangposition der Haltewelle (19) mittels der Verstelleinrichtung (27) relativ zum Anschlag (28) zugleich mit der Verstellung des Abschaltpunktes einstellbar ist.

6. Vorrichtung nach Anspruch 5, dadurch gekennzeichnet, daß der Anschlag (28) ein in einer Gehäuseschulter (46) anliegender Kunststoffring (45) ist.

7. Vorrichtung nach Anspruch 1, dadurch gekennzeichnet, daß zwischen den ineinandergreifenden Gewinden (40, 63) der Anschlaghülse (47) und der Schalthülse (32) in Umfangsrichtung wirkende Bremselemente (54), vorzugsweise Kunststoffklötzchen, vorgesehen sind.

8. Vorrichtung nach Anspruch 7, dadurch gekennzeichnet, daß die Bremselemente (54) in der Anschlaghülse (47) untergebracht sind.

9. Vorrichtung nach Anspruch 1, dadurch gekennzeichnet, daß die Anschlaghülse (47) einen unrunden, vorzugsweise sechskantigen, Außenumfang (48) besitzt und in einer im Gehäuse (3) verdrehgesicherten Hülse (57) mit entsprechend geformtem Innenquerschnit (59) verschiebbar ist.

10. Vorrichtung nach Anspruch 9, dadurch gekennzeichnet, daß die Hülse (57) an einem Gehäusebund (55) abgestützt ist, und daß zwischen der Hülse (57) und der Schalthülse (32) eine Druckfeder (60) angeordnet ist, die die Schalthülse (32) entgegen der Ausfahr-Schieberichtung (A) beaufschlagt.

11. Vorrichtung nach Anspruch 10, dadurch gekennzeichnet, daß die Druckfeder (60) an der Schalthülse (32) an einem auf dieser sitzenden, gegebenenfalls auf der Anschlaghülse (47) drehgesicherten, Widerlagerring (61) ansteht.

12. Vorrichtung nach Anspruch 1, dadurch gekennzeichnet, daß an der Schalthülse (32) ein erstes Begrenzungselement (44), vorzugsweise ein Ring mit rundem Querschnitt, zur Begrenzung des Schraubhubes zwischen der Schalthülse (32) und der Anschlaghülse (47) und im Gehäuse (3) ein zweites Begrenzungselement (43), vorzugsweise ein O-Ring, zur Begrenzung des Hubweges der Schalthülse (32) unter dem Einfluß der Druckfeder (60) vorgesehen sind.

13. Vorrichtung nach Anspruch 1, dadurch gekennzeichnet, daß die Haltewelle (19) mit der Schalthülse (32) und der Anschlaghülse (47) in einem Anschnitt des Gehäuses (3) untergebracht sind, der zwischen weitere, selbständige Baueinheiten der Vorrichtung (1), z.B. zwischen einem vorderen Niederhalter-Gehäuseabschnitt (4) und einem hinteren Antriebs-Gehäuseabschnitt (5), austauschbar eingesetzt ist.

14. Vorrichtung nach wenigstens einem der Ansprüche 1 bis 13, dadurch gekennzeichnet, daß an der Schalthülse (32') zwei mit einem festen Abstand axial versetzte Abtastkanten (34, 64) vorgesehen sind, daß im Gehäuse (3) eine zweite, auf den Bewegungsweg der zweiten Abtastkante (64) ausgerichtete Abtastvorrichtung (71) vorgesehen ist, und daß die zweite Abtastvorrichtung (71) im Gehäuse (3) in axialer Richtung verstellbar festgelegt ist.

15. Vorrichtung nach Anspruch 14, dadurch gekennzeichnet, daß die zweite Abtastvorrichtung (71) in einem Halteteil (69) festgelegt ist, der mit der zweiten Abtastvorrichtung (71) in einer axial verlaufenden Ausnehmung (65) des Gehäuses (3) verschiebbar ist.

16. Vorrichtung nach Anspruch 15, dadurch gekennzeichnet, daß im Gehäuse (3) eine axiale Führungsbahn (68) für den Halteteil (69) vorgesehen ist.

17. Vorrichtung nach Anspruch 15, dadurch gekennzeichnet, daß der Halteteil (69) mittels einer Klemmvorrichtung (80, 76) in der Ausnehmung (65) festlegbar ist.

18. Vorrichtung nach Anspruch 17, dadurch gekennzeichnet, daß die Klemmvorrichtung (80) eine auf der Abtastvorrichtung (71) und gegen das Gehäuse (3) festziehbare Haltemutter (73) aufweist.

19. Vorrichtung nach Anspruch 17, dadurch gekennzeichnet, daß die Klemmvorrichtung (76) eine axial ausgerichtete Gewindespindel (77) aufweist, die am Halteteil (69) angreift und in einem gehäusefesten Widerlager (78) verschraubbar ist.

**Claims**

1. Device (1, 1') for setting fasteners or bolts, in particular a screw-action device, including a housing (3) which accommodates an at least slideably disposed holding shaft (19) for a setting tool (22), with at least one drive for the holding shaft (19) accommodated in the housing which drive is connectable with the holding shaft, with a switch bushing (32, 32') which is displaceable together with the holding shaft in the outwards-sliding direction, and which has at least one probing edge (34, 64) inside the housing to define a switch-off point within the outward lift of the holding shaft, with a probing device (35, 71) for the probing edge (34, 64) disposed on the housing and in switch-off connection with the drive, and with a mechanical adjusting device (27), accessible from the outside, for adjusting the axial position of the switch-off point relative to the holding shaft (19), characterized in that the switch bushing (32, 32') can be screwed onto a stop buffer (47) which is biassed against turning and which embraces the holding shaft (19) by way of interlocking threads (40, 63) with an entrainment protrusion arranged to entrain the stop buffer (47) and the switch bushing (32) in the outwards-sliding direction (A); and that the switch bushing (32, 32') forms an externally accessible adjusting member of the adjusting device (27).

2. Device according to claim 1, characterized in that the entrainment protrusion (31, 49) is a circular body, rotatable relative to the holding shaft (19) but not displaceable, of an axial pressure bearing (50) mounted on the holding shaft (19).

3. Device according to claim 2 characterized in that an abutment support (30) is disposed on the stop buffer (47) which abutment support is arranged against the outwards-sliding direction (A) towards the entrainment protrusion (31, 49) of the holding shaft (19).

4. Device according to claim 1, characterized in that the switch bushing (32, 32') is provided with several external insertion holes (41) for a turning tool spaced out around its periphery; and that in the housing (3) is provided at least one recess (62) in the peripheral direction and arranged towards the insertion holes (41) whilst the holding shaft (19) is in a forward-thrust adjusting position.

5. Device according to claim 1, characterized in that inside the housing (3) a buffer (28) for catching the holding shaft (19) in the outwards-sliding direction (A) is provided; and that the axial catching position of the holding shaft (19) can be adjusted by way of the adjusting device (27) relative to the buffer (28) and simultaneously with the adjusting of the switch-off point.

6. Device according to claim 5, characterized in that the buffer (28) is a plastics material ring (45) abutting against a housing shoulder (46).

7. Device according to claim 1, characterized in that between the interlocking threads (40, 63) of the stop buffer (47) and the switch bushing (32), peripherally effective brake elements (54), preferably plastics material blocks, are provided.

8. Device according to claim 7, characterized in that the brake elements (54) are disposed in the stop buffer (47).

9. Device according to claim 1, characterized in that the stop buffer (47) has a non-circular, preferably hexagonal circumference (48) and is displaceable in a rotationproof sleeve (57) inside the housing (3) with its inner cross-section (59) formed accordingly.

10. Device according to claim 9, characterized in that the sleeve (57) abuts against a housing collar (55); that a tension spring (60) is positioned between sleeve (57) and the switch bushing (32) which tension spring biasses the switch bushing (32) against the outwards-sliding direction (A).

11. Device according to claim 10, characterized in that the tension spring (60) at the switch bushing (32) abuts against an abutment-support ring (61) disposed on the switch bushing (32) and is, if required, secured against turning.

12. Device according to claim 1, characterized in that at the switch bushing (32) a first restricting element (44), preferably a ring of round cross-section, is provided to restrict the screw lift between the switch bushing (32) and the stop buffer (47); and in the housing (3) a second restricting element (43), preferably a ring, is provided to restrict the lift path of the switch bushing (32) under the influence of the tension spring (60).

13. Device according to claim 1, characterized in that the holding shaft (19) is disposed with the switch bushing (32) and the stop buffer (47) in a section of the housing (3) which is exchangeably fitted inbetween further, self-contained assembly units of the device (1), for example between a front holding-down housing section (4) and a rear drive-housing section (5).

14. Device according to at least one of the claims 1 to 13, characterized in that at the switch bushing (32') two probing edges (34, 64) which are axially offset at a fixed distance are provided; that in the housing (3) a second probing device (71) which is arranged towards the path of movement of the second probing edge (64) is provided; and that the second probing device (71) in the housing (3) is fitted as to be adjustable in the axial direction.

15. Device according to claim 14, characterized in that the second probing device (71) is fitted into a holding member (69) which is displaceable with the second probing device (71) in an axially positioned recess (65) of the housing (3).

16. Device according to claim 15, characterized in that in the housing (3) an axial guide track (68) for the holding member (69) is provided.

17. Device according to claim 15, characterized in that the holding member (69) can be secured in the recess (65) by way of a clamping device (80, 76).

18. Device according to claim 17, characterized in that the clamping device (80) has a securing nut (73) which can be tightened against the probing device (71) and against the housing (3).

19. Device according to claim 17, characterized in that the clamping device (76) has as axially aligned threaded spindle (77) which engages at the holding member (69) and can be screwed down in an abutment support which is secured to the housing.

**Revendications**

1. Dispositif (1, 1') pour la pose d'éléments de fixation ou de boulons filetés, en particulier dispositif à vis, avec un boitier (3) dans lequel un arbre de fixation (19) pour un outil de pose (22) est disposé de façon au moins déplaçable, avec au moins un entrainement en déplacement, disposé dans le boitier de l'arbre de fixation (19), qui peut être amené en liaison avec l'arbre de fixation, avec une douille de commutation (32, 32') pouvant être amenée, en commun avec l'arbre de fixation, dans le sens du glissement de sortie, qui présente au moins un bord d'observation (34, 64) définissant un point de déconnexion situé dans le boitier, à l'intérieur de la course de sortie, avec un dispositif d'observation (35, 71) pour le bord de sortie (34, 64), qui est en liaison de déconnexion avec l'entraînement en déplacement, et qui est situé à l'intérieur du boitier, et avec un dispositif de réglage (27) mécanique et ajustable de l'extérieur, pour ajuster la position axiale du point de déconnexion par rapport à l'arbre de fixation (19), caractérisé en ce que la douille de commutation (32, 32') peut être vissée sur une douille de butée (47) entourant l'arbre de fixation (19), fixée de manière à empêcher la rotation, au moyen de filetages (40, 63) en prise l'un avec l'autre, douille sur laquelle une came d'entraînement (31, 49) de l'arbre de fixation (19) est dirigée dans le sens du coulissement de sortie (A) pour l'entraînement de la douille de butée (47) et de la douille de commutation (32) et que la douille de commutation (32, 32') forme une pièce de réglage accessible de l'éxtérieur du dispositif de réglage (27).

2. Dispositif selon la revendication 1, caractérisé en ce que la came d'entraînement (31, 49) est un corps annulaire rotatif mais non déplaçable d'un palier de butée axial (50) monté sur l'arbre de fixation (19).

3. Dispositif selon la revendication 2, caractérisé en ce que sur la douille de butée (47), il est monté une contre-butée (30), qui est dirigée dans le sens contraire au glissement de sortie (A), sur la came d'entraînement (31, 49) de l'arbre de fixation (19).

4. Dispositif selon la revendication 1, caractérisé en ce que dans la douille de commutation (32, 32'), il est prévu à l'éxtérieur plusieurs ouvertures d'insertion (41) réparties sur la périphérie, pour recevoir un outil rotatif, et que dans le boîtier (3), il est prévu au moins une cavité (62), s'étendant dans le sens périphérique et, dans une position de règlage avancée de l'arbre de fixation (19) dirigée vers les ouvertures d'enfichage (41).

5. Dispositif selon la revendication 1, caractérisé en ce qu'à l'intérieur du boîtier (3), il est prévu une butée (28) pour intercepter l'arbre de fixation (19) dans le sens du glissement de sortie (A), et que la position d'interception axiale de l'arbre de fixation (19) est ajustable, au moyen du dispositif de réglage (27), par rapport à la butée (28), en même temps que le règlage du point de déconnexion.

6. Dispositif selon la revendication 5, caractérisé en ce que la butée (28) est un anneau en matière plastique (45) s'appuyant sur un épaulement de boîtier (46).

7. Dispositif selon la revendication 1, caractérisé en ce qu'entre les filetages (40, 63), en prise l'un avec l'autre, de la douille de butée (47) et de la douille de commutation (32), il est prévu des éléments de freinage (54) actifs dans le sens périphérique, de préférence des petits sabots en plastique.

8. Dispositif selon la revendication 7, caractérisé en ce que les éléments de freinage (54) sont montés dans la douille de butée (47).

9. Dispositif selon la revendication 1, caractérisé en ce que la douille de butée (47) présente une circonférence extérieure (48) non arrondie, de préférence hexagonale, et qu'elle est déplaçable dans une douille (57) de section intérieure ayant une forme appropriée, fixée dans le boîtier (3) de manière à empêcher la rotation.

10. Dispositif selon la revendication 9, caractérisé en ce que la douille (57) s'appuie contre un faisceau de boîtiers (55), et qu'entre la douille (57) et la douille de commutation (32), il est disposé un ressort de compression (60), qui agit sur la douille de commutation (32) dans le sens opposé au glissement de sortie (A).

11. Dispositif selon la revendication 10, caractérisé en ce que le ressort de compression (60) est disposé sur l'anneau de contre-palier (61) situé sur la douille de commutation (32), éventuellement fixé de façon à empêcher la rotation sur la douille de butée (47).

12. Dispositif selon la revendication 1, caractérisé en ce que sur la douille de commutation (32), il est prévu un premier élément de limitation (44), de préférence un anneau à section circulaire, pour limiter la course de vissage entre la douille de commutation (32) et la douille de butée (47), et que dans le boîtier (3), il est prévu un second élément de limitation (43), de préférence un anneau, pour limiter la course de la douille de commutation (32) sous l'action du ressort de compression (60).

13. Dispositif selon la revendication 1, caractérisé en ce que l'arbre de fixation (19), avec la douille de commutation (32) et la douille de butée (47), est disposé dans une entaille du boîtier (3), qui est disposée de manière remplaçable entre d'autres éléments indépendants du dispositif (1), par exemple entre une entaille de boîtier de pressage avant (4) et une entaille de boîtier d'entraînement arrière (5).

14. Dispositif selon l'une quelconque des revendications 1 à 13, caractérisé en ce que sur la douille de commutation (32'), il est prévu deux bords d'observation (34, 64) décalés axialement à une distance fixe, que dans le boîtier (3) il est prévu un second dispositif d'observation (71), dirigé dans le sens du second bord d'observation (64), et que le second dispositif d'observation (71) est disposé dans le boîtier (3) de manière déplaçable dans le sens axial.

15. Dispositif selon la revendication 14, caractérisé en ce que le deuxième dispositif d'observation (71) est déplaçable dans une cavité (65) à orientation axiale du boîtier (3).

16. Dispositif selon la revendication 15, caractérisé en ce que dans le boîtier (3), il est prévu une glissière axiale (68) pour la pièce de fixation (69).

17. Dispositif selon la revendication 15, caractérisé en ce que la pièce de fixation (69) peut être montée de manière fixe dans la cavité (65) au moyen d'un dispositif de serrage (80, 76).

18. Dispositif selon la revendication 17, caractérisé en ce que le dispositif de serrage (80) comporte un écrou (73) de fixation pouvant être amené de manière fixé sur le dispositif d'observation (71) et contre le boîtier (3).

19. Dispositif selon la revendication 17, caractérisé en ce que le dispositif de serrage (76) présente une broche filetée (77) dirigée axialement vers l'éxtérieur, qui saisit la pièce de fixation (69) et qui peut être vissée dans un contre-palier (78) fixe par rapport au boîtier.

**FIG.1**

3  59  58  57  45  19  44  54  31  51  52  32  62  40  18a  18          1        2        5

21  20  60  47  61  53  30  49  50

22

                                                                    15  11  7    12        8

48

56                                                          41

55

                                                                    14  13    16  17

46                    28  29  38  27  33  32  34  39  35  36  42  43  37              6

                                63

FIG. 2a

EP 0 256 289 B1

FIG.2b

FIG.3

EP 0 256 289 B1